# EUROPÄISCHE PATENTSCHRIFT

(11) **EP 0 730 839 B1**
(45) Veröffentlichungstag und Bekanntmachung des Hinweises auf die Patenterteilung: **02.11.2000**
(21) Anmeldenummer: 96103647.2
(22) Anmeldetag: 08.03.1996
(51) Int. Cl.: A47K 3/00, F16B 37/06

(54) **Befestigungsvorrichtung für einen Badewannengriff oder dergleichen**
Fastening device for a handle of a bath tub or the like
Dispositif de fixation pour une poignée d'une baignoire ou similaire

(30) Priorität: 10.03.1995 DE 19508629
(43) Veröffentlichungstag der Anmeldung: 11.09.1996
(73) Patentinhaber: FRANZ KALDEWEI GMBH & CO., 59229 Ahlen (DE)
(72) Erfinder: Mateina, Ludger, D-59227 Ahlen (DE)
(74) Vertreter: Albrecht, Rainer Harald, Dr.-Ing.

(56) Entgegenhaltungen:
- DE-A- 3 335 886
- DE-A- 3 717 155
- DE-A- 4 034 759
- DE-U- 9 015 002
- US-A- 2 964 989

## Beschreibung

Die vorliegende Erfindung betrifft eine Befestigungsvorrichtung für einen Badewannengriff oder dergleichen, umfassend ein an der nach dem Einbau der Wanne zugänglichen Seite angeordnetes und befestigtes Griffelement und wenigstens ein Befestigungselement für die Anbringung des Griffelements an der Wannenwand, wobei das Befestigungselement ein Befestigungsprisma umfaßt mit einer zentrischen Bohrung, einer Befestigungsschraube, deren Schaft von der zentrischen Bohrung des Befestigungsprismas aufgenommen wird und eine Mutter, in die das Gewinde der Schraube einschraubbar ist.

Beispielsweise aus der DE-A-33 35 886 ist eine Befestigungsvorrichtung für einen Badewannengriff der vorgenannten Art bekannt. Bei der bekannten Einrichtung werden die Befestigungsschrauben in Einnietmuttern eingeschraubt, die in der Wannenwandung festliegen. Da diese Muttern bereits herstellerseitig in die Wannenwandung eingenietet werden, liegt in nachteiliger Weise die Position für die Montage des Wannengriffs von vornherein fest ebenso wie die Größe des Wannengriffs, die durch den Abstand von in der Regel 2 verwendeten Einnietmuttern vorgegeben ist. Die Anbringung des Griffelements erfolgt dann nach Einschrauben der Befestigungsschrauben durch eine Art Bajonettverschluß, indem der Griff aufgesetzt und durch seitliches verschieben in seine Befestigungslage gebracht wird. Diese Art der Befestigung ist unter Umständen nicht ausreichend sicher, insbesondere, da ein Badewannengriff aufgrund seiner Haltefunktion relativ hohen Belastungen auch in seitlicher Richtung ausgesetzt werden kann.

Die Aufgabe der vorliegenden Erfindung besteht somit darin, eine Befestigungsvorrichtung für einen Badewannengriff oder dergleichen der eingangs genannten Art zu schaffen, die hinsichtlich der Form des anzubringenden Badewannengriffs oder eines anderen Accessoires nicht durch einen vorgegebenen Nietabstand beschränkt ist und die eine einfache, rasche und sichere Anbringung des Badewannengriffs ermöglicht.

Die Lösung dieser Aufgabe liefert eine Befestigungsvorrichtung für einen Badewannengriff oder dergleichen der eingangs genannten Gattung mit den kennzeichnenden Merkmalen des Hauptanspruchs.

Gemäß der Erfindung werden für die einzuschraubenden Befestigungsschrauben als Muttern sogenannte Blindnietmuttern verwendet, die nicht in die Wannenwand eingenietet sind, sondern durch anzubringende Bohrungen in der Wannenwand hindurchsteckbar sind. Diese Blindnietmuttern weisen einen Kopf auf, der formschlüssig und unverdrehbar von einer entsprechend geformten Aufnahme in der Unterseite des Befestigungsprismas aufgenommen wird. Weiterhin haben die Blindnietmuttern eine angeformte Gewindehülse, in die das Gewinde der Befestigungsschraube einschraubbar ist und einen elastisch verformbaren Teil, der die Gewindehülse und den Kopf der Blindnietmutter verbindet. Dieser elastisch verformbare Teil ist so ausgebildet, daß er beim anziehen der Befestigungsschraube sich verformt und von der Innenseite hinter die Wannenwandung greift, wodurch das Befestigungsprisma festgelegt wird.

Die Montage dieser Befestigungsvorrichtung erfolgt also folgendermaßen. Die Blindnietmutter wird in den Vierkantansatz des Befestigungsprismas gesteckt. Durch die zentrische Bohrung des Befestigungsprismas wird die Befestigungsschraube hindurchgesteckt und in ein Gewinde der Blindnietmutter, die eine angeformte Gewindehülse aufweist, eingeschraubt. Die so vormontierte (werkseitig) Befestigungseinheit wird durch die Montagebohrung in die Wanne gesteckt. Die verwendete Blindnietmutter kann mehrere über den Umfang verteilt angeordnete elastische Stege aufweisen, die an einer Seite mit dem Kopf der Blindnietmutter verbunden sind und an der anderen Seite mit einem ringförmigen unteren Abschnitt der Blindnietmutter, in dem wiederum konzentrisch die Gewindehülse liegt, in die das Gewinde der Befestigungsschraube eingeschraubt wird. Zieht man nun die Befestigungsschraube an, dann wandert der Teil der Blindnietmutter mit den elastischen Stegen axial entlang des Schafts der Befestigungsschraube auf die Wannenwand zu. Die elastischen Stege falten sich dabei auf und klemmen sich hinter die Wannenwand, so daß die Blindnietmutter und damit das Befestigungsprisma von der Wannensichtseite her nicht mehr abgezogen werden können. Bei Bedarf kann aber auch bei eingebauter Badewanne durch Lösen der Befestigungsschraube das Befestigungsprisma und damit der Wannengriff wieder gelöst werden. Nach der Montage des Befestigungsprismas wird ein unterseitig mit einer Aufnahme geformtes Griffelement über das Befestigungsprisma gestülpt und zum Beispiel mit einer radialen Schraube mit dem Befestigungsprisma verbunden.

Dadurch, daß der Kopf der Blindnietmutter formschlüssig und unverdrehbar von der Aufnahme in der Unterseite des Befestigungsprismas aufgenommen wird, ist beim Anziehen der Befestigungsschraube für die Blindnietmutter ein Widerlager gegeben.

Der zylindrische Flansch des Befestigungsprismas, der an der Wannenwandung zur Anlage kommt, kann über einen Dichtungsring abgedichtet werden. An der Stirnseite des Griffelements kann zwischen diesem und der Wannenwandung noch eine ringförmige Abschlußscheibe angeordnet werden. Der Wannengriff selbst kann mehrteilig sein, das heißt an dem Griffelement, daß am Befestigungsprisma festgeschraubt wird, können weitere Teile des Griffs bereits angebracht sein oder nachträglich angebracht werden. Der Wannengriff kann zum Beispiel etwa eine U-Form aufweisen mit zwei an der Wannenwandung befestigten Griffelementen, die die Schenkel des U bilden und einem U-Steg, der etwas länger ist als die Schenkel, den eigentlichen Haltegriff bildet und der mit Abstand zur Wannenwandung parallel zu dieser verläuft. Ebensogut sind aber andere Formen des Badewannengriffs denkbar. Auch können andere Accessoires anstelle eines Badewannengriffs nach dem gleichen Prinzip an der Wannenwandung angebracht werden.

Nachfolgend wird die vorliegende Erfindung anhand eines Ausführungsbeispiels unter Bezugnahme auf die beiliegenden Zeichnungen näher beschrieben. Dabei zeigen
- Fig. 1: eine Explosionsdarstellung der Befestigungselemente für eine erfindungsgemäße Wannenbefestigung;
- Fig. 2a: eine Ansicht des Befestigungsprismas von der Unterseite;
- Fig. 2b: einen vertikalen Schnitt durch das Befestigungsprisma von Fig. 2a;
- Fig. 2c: eine Ansicht des Befestigungsprismas gemäß den Fig. 2a und 2b von oben;
- Fig. 3a: einen vertikalen Schnitt durch ein Befestigungsprisma mit Blindnietmutter
- Fig. 3b: einen Längsschnitt druch Befstigungsprisma und Blindnietmutter ähnlich wie in Fig. 3a, jedoch nach Befestigung an einer Wannenwand;
- Fig. 4: eine Schnittdarstellung durch einen gemäß der Erfindung befestigten Wannengriff.

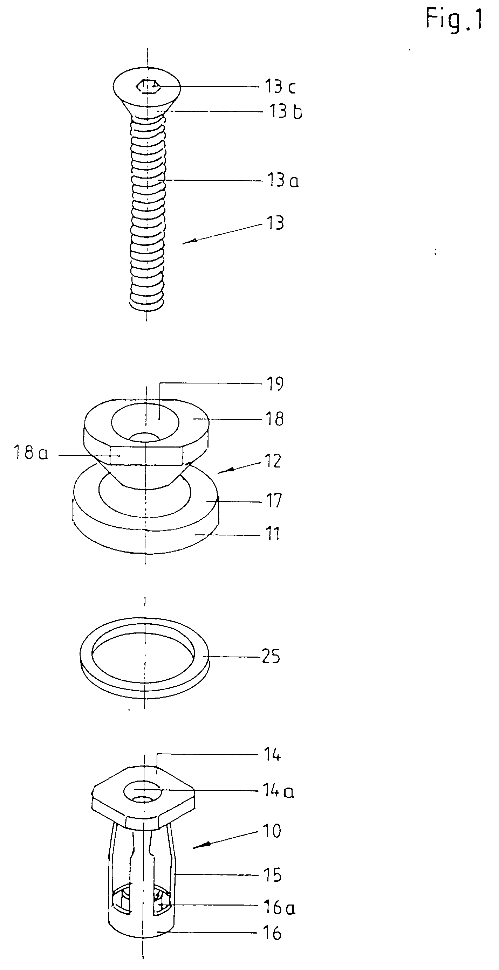

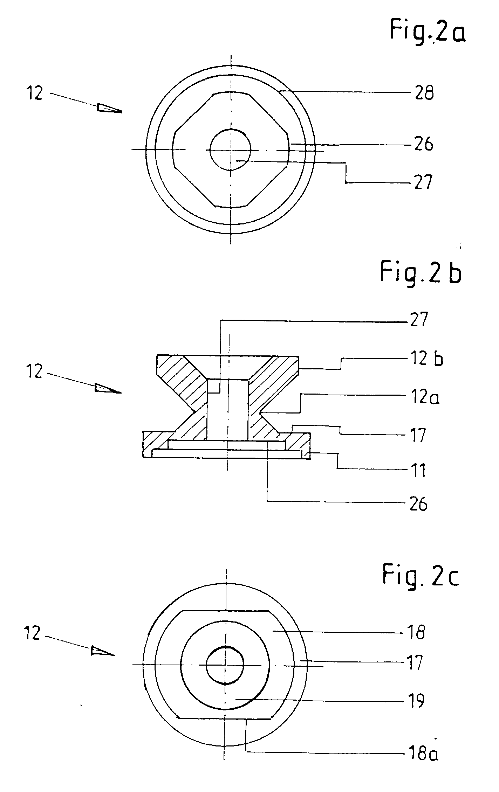

Zunächst wird auf die Fig. 1 und 2a bis 2c Bezug genommen. Die Explosionsdarstellung gemäß Fig. 1 zeigt die wesentlichen Elemente für die Befestigung eines Wannengriffs im Rahmen der vorliegenden Erfindung. Dies sind zum einen die Blindnietmutter 10, der Dichtungsring 25 für die Abdichtung an der Wannenwand, das Befestigungsprisma 12, das unterseitig den Kopf 14 der Blindnietmutter aufnimmt und die Senkkopfschraube 13, die in das Gewinde der Blindnietmutter 10 eingeschraubt wird. Diese Senkkopfschraube 13 hat einen Kopf 13b, zum Beispiel mit Innensechskant 13c und einen Schaft mit Außengewinde 13a.

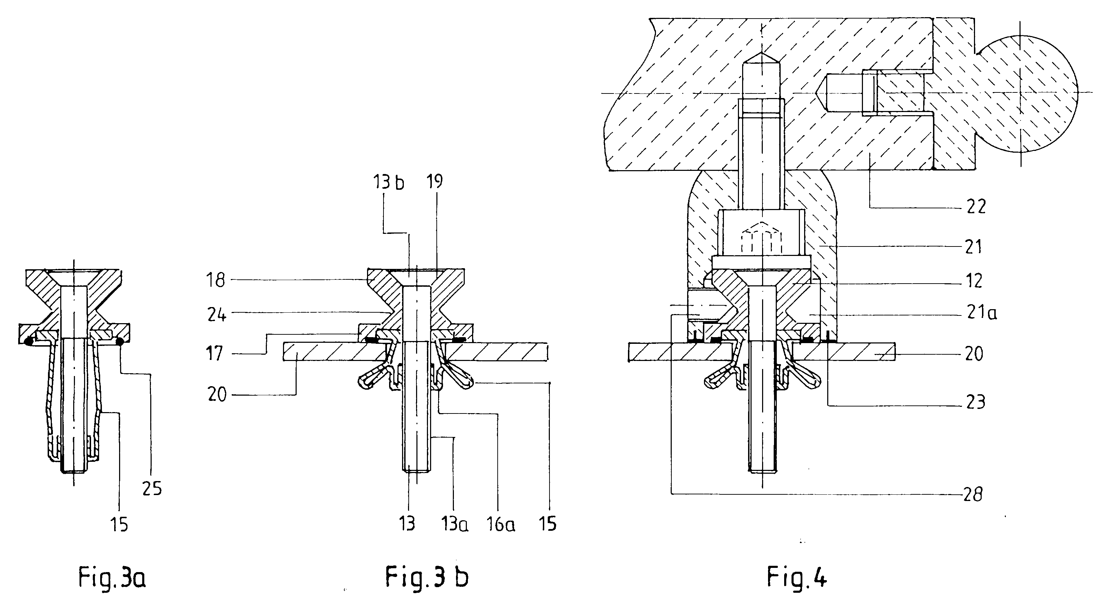

Das in Fig. 1 dargestellte Befestigungsprisma wird nachfolgend unter Bezugnahme auf die drei Zeichnungen Fig. 2a bis Fig. 2c im Detail erläutert. Es handelt sich um ein im unteren Bereich rotationssymmetrisches Teil mit einem unteren zylindrischen Flansch 11, der nach oben hin in einen horizontalen ringförmigen Absatz 17 übergeht. Oberhalb des Absatzes 17 verjüngt sich das Befestigungsprisma 12 konisch, so daß sich eine Einschnürung 12a ergibt, in deren Höhe das Teil am schmalsten ist und oberhalb derer es sich wieder konisch verbreitert. Im obersten Teil ergibt sich ein zylindrischer Abschnitt 12b. In der Draufsicht ist dieser obere Abschnitt des Befestigungsprismas 12 jedoch nicht rund, sondern an zwei Seiten abgeflacht, wie man aus Fig. 2c erkennt, so daß sich eine teilringförmige obere Fläche 18 ergibt mit zwei gradlinig verlaufenden Abflachungen 18a. Im oberen Teil des Befestigungsprismas ist eine konische Aufnahme 19 für den Kopf 13b der Senkkopfschraube gebildet. Nach unten hin schließt sich an diese Aufnahme 19 eine zentrische zylindrische Durchgangsbohrung 27 an. Durch diese hindurch erstreckt sich der Schaft 13a der Senkkopfschraube 13. An der Unterseite weist das Befestigungsprisma 12, wie man aus Fig. 2a erkennen kann, eine etwa quadratische, jedoch an den Ecken jeweils abgerundete Aufnahme 26 auf, die entsprechende geformt ist wie der Kopf 14 der Blindnietmutter 10 (siehe Fig. 1) und diesen bei der Befestigung passend aufnimmt, wie man auch aus Fig. 3a erkennen kann. Unterhalb dieser Aufnahme 26 befindet sich noch eine im Durchmesser etwas größere zylindrische Aufnahme 29, die im montierten Zustand den Dichtungsring 25 aufnimmt, wie man aus den Fig. 3a und 3b entnimmt.

Die Blindnietmutter 10 ist in Fig. 1 perspektivisch dargestellt. Wie man sieht, ist der Kopf 14 annähernd quadratisch mit jedoch Abrundungen an den Ecken und entspricht wie oben bereits erwähnt wurde der Aufnahme 26 des Befestigungsprismas 12. Der Kopf 14 hat eine zentrische zylindrische Durchgangsbohrung 14a für den Schaft der Senkkopfschraube 13. Im unteren Bereich weist die Blindnietmutter einen ringförmigen Abschnitt 16 auf, der über drei Stege 15 mit dem Kopf 14 verbunden ist. Dieser ringförmige Abschnitt ist wie man aus Fig. 3a erkennt außerdem am unteren Ende der Blindnietmutter verbunden mit einem inneren konzentrischen Abschnitt, der als Gewindehülse 16a ausgebildet ist. Diese Gewindehülse 16a hat ein Innengewinde, das das Außengewinde 13a der Senkkopfschraube 13 aufnimmt.

Die Funktion der Blindnietmutter wird gut aus den Fig. 3 und 3b erkennbar. Das Gewinde 13a der Senkkopfschraube 13 wird in das Gewinde der Hülse 16a eingeschraubt. Beim Anziehen der Senkkopfschraube wandert dann die Gewindehülse 16a entlang des Schafts der Senkkopfschraube 13 nach oben in Richtung auf die Wannenwandung 20. Dadurch werden die Stege 15, die ausreichend elastisch ausgebildet sind eingezogen und legen sich dann wie bei einer Faltung hinter die Wannenwand 20, so daß sie ein Widerlager bilden und gegen ein Abziehen des Befestigungsprismas 12 von der Wannenwandung sperren. Der Dichtungsring 25 dichtet gegen die Wannenwandung 20 ab.

Nach Befestigung des Befestigungsprismas 12 mittels der Blindnietmutter 10 gemäß der Darstellung von Fig. 3b erfolgt dann die Anbringung des Wannengriffs 21, 22 gemäß der Darstellung von Fig. 4 von der Innenseite der Wanne her. Dazu wird das hülsenförmige Griffteil 21, das mit einer konzentrischen Ausnehmung 21a versehen ist über das Befestigungsprisma 12 gestülpt und mit Hilfe eines radial zum Befestigungsprisma 12 angeordneten Gewindestifts 28 festgeschraubt. Dabei greift der am vorderen Ende spitz zulaufende Gewindestift durch eine radiale Bohrung des zylindrischen Griffteils 21 und gelangt dann in die Aussparung 24 des Befestigungsprismas 12, dort wo dieses verjüngt ist, so daß ein kraftschlüssiger Eingriff erfolgt. Zwischen dem zylindrischen Griffteil 21 und der Wannenwandung 20 ist am stirnseitigen Ende des Griffteils 21 noch eine Abschlußscheibe 23 angeordnet. Mit dem der Wanne zugewandten zylindrischen Griffteil 21 zum Beispiel über eine Schraubverbindung verbunden ist das weitere Griffteil 22, das zum Beispiel wie ein Haltegriff ausgebildet sein kann. In der genannten Weise können auch anders geformte Griffe oder andere Accessoires im Bereich der Wandung einer Badewanne befestigt werden.

## Patentansprüche

1. Befestigungsvorrichtung für einen Badewannengriff oder dergleichen, umfassend ein an der nach dem Einbau der Wanne zugänglichen Seite angeordnetes und befestigtes Griffelement (21) und wenigstens ein Befestigungselement für die Anbringung des Griffelements (21) an der Wannenwand (20), wobei das Befestigungselement ein Befestigungsprisma (12) umfaßt mit einer zentrischen Bohrung (27), einer Befestigungsschraube (13), deren Schaft (13a) von der zentrischen Bohrung (27) des Befestigungsprismas (12) aufgenommen wird und eine Mutter (10), in die das Gewinde der Schraube (13) einschraubbar ist, dadurch gekennzeichnet, daß die Mutter eine Blindnietmutter (10) ist, mit einem Kopf (14), der formschlüssig und unverdrehbar von einer entsprechend geformten Aufnahme (26) in der Unterseite des Befestigungsprismas (12) aufgenommen wird, und daß die Blindnietmutter (10) eine angeformte Gewindehülse (16a) aufweist, in die das Gewinde (13a) der Befestigungsschraube (13) einschraubbar ist und einen elastisch verformbaren Teil (15), der Gewindehülse (16a) und Kopf (14) der Blindnietmutter verbindet.

2. Befestigungsvorrichtung für einen Badewannengriff oder dergleichen nach Anspruch 1, dadurch gekennzeichnet, daß wenigstens ein Griffelement (21) eine Ausnehmung (21a) aufweist, so daß es über das Befestigungsprisma (12) stülpbar ist und dabei stirnseitig an der Wannenwandung (20) zur Anlage kommt und daß ein Befestigungselement (28) zur Festlegung des Griffelements (21) am Befestigungsprisma (12) vorgesehen ist.

3. Befestigungsvorrichtung für einen Badewannengriff oder dergleichen nach einem der Ansprüche 1 bis 2, dadurch gekennzeichnet, daß die Blindnietmutter (10) mehrere über den Umfang verteilt angeordnete elastische Stege (15) aufweist, die an einer Seite mit dem Kopf (14) verbunden sind und an der anderen Seite mit einem ringförmigen unteren Abschnitt (16) der Blindnietmutter, in dem wiederum konzentrisch die Gewindehülse (16a) liegt.

4. Befestigungsvorrichtung für einen Badewannengriff oder dergleichen nach einem der Ansprüche 1 bis 3, dadurch gekennzeichnet, daß als Befestigungsschraube (13) eine Senkkopfschraube vorgesehen ist, deren Kopf (13b) von einer konischen Aufnahme (19) des Befestigungsprismas (12) aufgenommen wird.

5. Befestigungsvorrichtung für einen Badewannengriff oder dergleichen nach einem der Ansprüche 1 bis 4, dadurch gekennzeichnet, daß das Befestigungsprisma (12) einen zylindrischen Flansch (11) aufweist, der an der Wannenwandung (20) zur Anlage kommt und daß ein Dichtungsring (25) vorgesehen ist, der zur Wannenwandung (20) hin abdichtet und in einer unterseitigen ringförmigen Aufnahme (29) des Befestigungsprismas (12) aufgenommen wird.

6. Befestigungsvorrichtung für einen Badewannengriff oder dergleichen nach einem der Ansprüche 1 bis 5, dadurch gekennzeichnet, daß der Kopf (14) der Blindnietmutter (10) im Umriß eckig ist und von einer entsprechend eckig geformten unterseitigen Aufnahme (26) des Befestigungsprismas (12) aufgenommen wird.

## Claims

1. A fastening apparatus for a bathtub handle or the like, comprising a handle element (21) disposed on and fixed to the side of the tub which is accessible after the installation of the tub, and at least one fastening element for mounting the handle element (21) on the tub wall (20), wherein the fastening element comprises a fastening V-piece (12) with a central hole (27), a fastening screw (13), the shank (13a) of which is received by the central hole (27) in the fastening V-piece (12), and a nut (10) into which the thread of the screw (13) can be screwed, characterised in that the nut is a blind rivet nut (10) with a head (14) which is received positively and non-rotatably by a correspondingly shaped recess (26) in the underside of the fastening V-piece (12), and that the blind rivet nut (10) comprises an integrally formed threaded bush (16a) into which the thread (13a) of the fastening screw (13) can be screwed, and comprises an elastically deformable part (15) which joins the threaded bush (16a) to the head (14) of the blind rivet nut.

2. A fastening apparatus for a bathtub handle or the like according to claim 1, characterised in that at least one handle element (21) has a recess (21a) so that it can be slid over the fastening V-piece (12) and its end face thereby comes into contact with the tub wall (20), and that a fastening element (28) is provided for securing the handle element (21) to the fastening V-piece (12).

3. A fastening apparatus for a bathtub handle or the like according to either one of claims 1 or 2, characterised in that the blind rivet nut (10) comprises a plurality of elastic links (15) which are distributed over its periphery and which are attached on one side to the head (14) and are attached on the other side to an annular lower section (16) of the blind rivet nut in which the threaded bush (16a) itself is situated concentrically.

4. A fastening apparatus for a bathtub handle or the like according to any one of claims 1 to 3, characterised in that a countersunk head screw is provided as a fastening screw (13), the head (13b) of which is received by a conical recess (19) in the fastening V-piece (12).

5. A fastening apparatus for a bathtub handle or the like according to any one of claims 1 to 4, characterised in that the fastening V-piece (12) comprises a cylindrical flange (11) which comes into contact with the tub wall (20), and that a sealing ring (25) is provided which forms a seal in relation to the tub wall (20) and which is seated in an annular recess (29) on the underside of the fastening V-piece (12).

6. A fastening apparatus for a bathtub handle or the like according to any one of claims 1 to 5, characterised in that the head (14) of the blind rivet nut (10) is polygonal in profile and is seated in a recess (26), which is of a correspondingly polygonal shape, in the underside of the fastening V-piece (12).

## Revendications

1. Dispositif de fixation pour une poignée de baignoire ou similaire, comprenant un élément de poignée (21) disposé et fixé sur le côté accessible après la pose de la baignoire et au moins un élément de fixation pour monter l'élément de poignée (21) sur la paroi de baignoire (20), l'élément de fixation comprenant un prisme de fixation (12) avec un trou central (27), une vis de fixation (13) dont la tige (13a) est logée dans le trou central (27) du prisme de fixation (12) et un écrou (10) dans lequel le filetage de la vis (13) peut être vissé, caractérisé en ce que l'écrou est un écrou à rivet aveugle (10) pourvu d'une tête (14) qui est logée par complémentarité de formes et sans possibilité de rotation dans un logement (26) de forme correspondante ménagé dans le dessous du prisme de fixation (12), et en ce que l'écrou à rivet aveugle (10) comporte une douille taraudée (16a), dans laquelle le filetage (13a) de la vis de fixation (13) peut être vissé, et une partie élastiquement déformable (15) qui relie la douille taraudée (16a) et la tête (14) de l'écrou à rivet aveugle.

2. Dispositif de fixation pour une poignée de baignoire ou similaire selon la revendication 1, caractérisé en ce qu'au moins un élément de poignée (21) est pourvu d'un évidement (21a), de sorte qu'il peut être enfilé par-dessus le prisme de fixation (12) et vient ainsi frontalement en butée contre la paroi de baignoire (20), et en ce qu'un élément de fixation (28) est prévu pour immobiliser l'élément de poignée (21) sur le prisme de fixation (12).

3. Dispositif de fixation pour une poignée de baignoire ou similaire selon l'une des revendications 1 et 2, caractérisé en ce que l'écrou à rivet aveugle (10) comporte plusieurs nervures élastiques (15), lesquelles sont réparties sur son pourtour et sont reliées, par l'un de leur côtés, à la tête (14) et, par leur autre côté, à une portion inférieure annulaire (16) de l'écrou à rivet aveugle dans laquelle la douille taraudée (16a) est à son tour disposée de manière concentrique.

4. Dispositif de fixation pour une poignée de baignoire ou similaire selon l'une des revendications 1 à 3, caractérisé en ce que la vis de fixation (13) prévue est une vis à tête fraisée dont la tête (13b) est logée dans un logement conique (19) du prisme de fixation (12).

5. Dispositif de fixation pour une poignée de baignoire ou similaire selon l'une des revendications 1 à 4, caractérisé en ce que le prisme de fixation (12) comporte un collet cylindrique (11) qui vient en butée contre la paroi de baignoire (20), et en ce qu'il est prévu une bague d'étanchéité (25) qui assure l'étanchéité en direction de la paroi de baignoire (20) et qui est logée dans un logement annulaire (29) ménagé dans le dessous du prisme de fixation (12).

6. Dispositif de fixation pour une poignée de baignoire ou similaire selon l'une des revendications 1 à 5, caractérisé en ce que la tête (14) de l'écrou à rivet aveugle (10) présente un contour polygonal et est logée dans un logement (26) de forme polygonale correspondante ménagé dans le dessous du prisme de fixation (12).
